# EUROPÄISCHE PATENTSCHRIFT

(11) **EP 2 266 297 B1**
(45) Veröffentlichungstag und Bekanntmachung des Hinweises auf die Patenterteilung: **02.09.2015**
(21) Anmeldenummer: 09727125.8
(22) Anmeldetag: 03.04.2009
(51) Int. Cl.: H04L 29/12, H04L 12/407

(54) **AUTOMATISCHE BUSADRESSVERGABE MITTELS KOLLISIONSPRÜFUNG**
AUTOMATIC BUS ADDRESS ASSIGNMENT USING COLLISION TESTING
ATTRIBUTION AUTOMATIQUE D'ADRESSES DE BUS PAR CONTRÔLE DE COLLISION

(30) Priorität: 04.04.2008 DE 102008017281
(43) Veröffentlichungstag der Anmeldung: 29.12.2010
(73) Patentinhaber: Zumtobel Lighting GmbH, 6850 Dornbirn (AT)
(72) Erfinder: KOCH, Patrik, Yves, 88085 Langenargen (DE); KÜHNE, Tobias, 6820 Frastanz (AT)
(74) Vertreter: Thun, Clemens
(86) Internationale Anmeldenummer: PCT/EP2009/002472
(87) Internationale Veröffentlichungsnummer: WO 2009/121622

(56) Entgegenhaltungen:
- WO-A-97/38370
- DE-A1- 10 329 682
- DE-A1- 19 713 240

## Beschreibung

Die vorliegende Erfindung betrifft die Adressvergabe an Vorrichtungen, die mit einer Busschnittstelle versehen sind.

Allgemein werden Adressier- bzw. Adressvergabeverfahren verwendet, um eine einzelne Vorrichtung aus einer Menge von beispielsweise an einem Bus angeschlossenen Vorrichtungen auszuwählen, um dieser selektierten Vorrichtung dann eine eindeutige Adresse zuzuweisen. Dieser Vorgang ist solange zu wiederholen, bis allen Vorrichtungen eines Bussystems eine innerhalb des betreffenden Systems eindeutige Adresse zugewiesen wurde.

Aus der deutschen Offenlegungsschrift DE 103 29 682 A1 ist ein Verfahren bekannt, bei dem eine Zentrale zeitgleich an alle elektrischen Betriebsgeräte, die mit der Zentrale über einen Bus verbunden sind, einen Sendebefehl übermittelt. Im Anschluss daran versucht jedes Betriebsgerät nach einer gewissen Sende-Verzögerungszeit, die für jedes Betriebsgerät zufällig gewählt wird, die Zentrale zu kontaktieren. Das Betriebsgerät, das sich als erstes meldet erhält dann von der Zentrale eine Adresse, sodass letztendlich sämtlichen Betriebsgeräte eine individuelle Adresse zugeordnet werden kann.

Ausgehend von diesem Stand der Technik ist es Aufgabe der vorliegenden Erfindung, eine verbesserte Möglichkeit zur Adressvergabe mittels Kollisionsdetektion vorzuschlagen.

Die Aufgabe wird durch ein Verfahren gemäß Anspruch 1 bzw. 2 und ein Betriebsgerät gemäß Anspruch 10 und ein Steuersystem gemäß Anspruch 11 gelöst. Vorteilhafte Weiterbildungen der Erfindung sind Gegenstand der abhängigen Ansprüche.

Ähnlich wie in der deutschen Offenlegungsschrift DE 103 29 682 A1, legt auch in der vorliegenden Erfindung jede mit einer Busschnittstelle versehene Vorrichtung unabhängig voneinander für sich selbst eine Sende-Verzögerungszeit fest, wobei die Möglichkeit besteht, dass diese dann für alle Durchläufe der Adressvergabe beibehalten werden kann. Daraufhin erhält jede Vorrichtung zeitgleich einen Sendebefehl von einer Zentrale, mit der sie über einen Bus verbunden ist. Im Gegensatz zum Stand der Technik wird jedoch nun zusätzlich zu dem Sendebefehl noch eine für alle Vorrichtungen gleiche Adresse übermittelt. Im Anschluss daran überwacht jede Vorrichtung während ihrer Sende-Verzögerungszeit fortlaufend den Bus auf eine Antwort einer anderen Vorrichtung.

Die Vorrichtung bei der als erstes die Sende-Verzögerungszeit abgelaufen ist, antwortet der Zentrale, dass sie die übermittelte Adresse übernimmt. Die anderen Vorrichtungen erkennen daraufhin die Antwort der als erstes sendenden Vorrichtung auf dem Bus und brechen ihre Sende-Verzögerungszeit ab und warten auf einen neuen Sendebefehl der Zentrale. Es ist vorteilhaft, dass Vorrichtungen, die ihre Sende-Verzögerungszeit abgebrochen haben, die zuvor empfangene und zwischengespeicherte Adresse verwerfen, insbesondere aus ihrem Speicher löschen. Die genannten Schritte werden jeweils ohne diejenigen Vorrichtungen wiederholt, die bereits eine Adresse aufweisen, bis schließlich allen Vorrichtungen eine Adresse zugewiesen wurde.

Durch die vorliegende Erfindung ist im Vergleich zur DE 103 29 682 A1 lediglich nur noch eine Antwort über die Annahme der Adresse nötig. Somit fällt insbesondere die Adressvergabe durch die Zentrale nach einer Rückmeldung des ersten Betriebsgerätes weg. Hierdurch ergibt sich eine Zeitersparnis und eine Aufwandsreduzierung bei der Vergabe der Adressen, da die Zentrale auf die Antwort der ersten Vorrichtung nicht mehr reagieren und sofort wieder einen neuen Sendebefehl und eine neue Adresse für einen Sendezyklus aussenden kann. Vorteilhaft kann dabei vorgesehen sein, dass die übermittelte Adresse gleichzeitig den neuen Sendebefehl darstellt.

Als weitere Möglichkeit schlägt die vorliegende Erfindung vor, dass sich jede Vorrichtung vorab eine individuelle Sendezeit zuteilt, wobei die Möglichkeit besteht, dass diese dann für alle Durchläufe der Adressvergabe beibehalten werden kann. Auf einen Befehl der Zentrale hin, mit dem auch eine für alle Vorrichtungen gleiche Adresse übermittelt wird, beginnen alle an dem Bus angeschlossenen Vorrichtungen zu senden, bis ihre sich selbst zugeteilte individuelle Sendezeit abgelaufen ist. Nach Ablauf dieser individuellen Sendezeit prüft jede Vorrichtung, ob durch ihre Beendigung des Sendevorgangs der Buszustand geändert wurde. Für den Fall, dass dies positiv entschieden wird, heißt es, dass durch die Beendigung des Sendens der jeweiligen Vorrichtung der Bus in den Ruhezustand zurückkehren konnte, da die betreffende Vorrichtung die längste Sendedauer in diesem Durchgang hatte. Die Vorrichtung, die festgestellt hat, dass sie den Buszustand ändern konnte, erkennt sich selbst als auserwählt und antwortet der Zentrale, dass sie die übermittelte Adresse übernimmt. Auch hier werden die genannten Schritte jeweils ohne diejenigen Vorrichtungen wiederholt, die bereits eine Adresse aufweisen, bis schließlich allen Vorrichtungen eine Adresse zugewiesen wurde.

Es gibt verschiedenste Möglichkeiten, wie eine Vorrichtung sich individuell den zeitlichen Parameter für die Sendeaktivität, wie beispielsweise die Sende-Verzögerungszeit oder die Sendezeit zuteilen kann. Als Beispiele seien die Erzeugung von Zufallszahlen und die Verwendung bereits in der Vorrichtung vorhandenen Nummern wie beispielsweise eines werkseitig vorgesehenen Identifikationscodes genannt.

Zusätzlich kann das Verfahren der vorliegenden Erfindung derart ausgestaltet sein, dass neu hinzugefügte Vorrichtungen sich selbstständig melden und eine Systemmodifikation auslösen, wobei die gleichzeitige Nutzung einer Adresse durch mehrere Vorrichtungen ohne externen Eingriff erkannt und beseitigt wird.

Gemäß einem weiteren Aspekt der vorliegenden Erfindung ist eine Vorrichtung mit einem digitalen Signaleingang und einem Controller vorgesehen, der zur Unterstützung derartiger Verfahren programmiert ist. Schließlich bezieht sich die Erfindung auch auf Steuersysteme, die eine Zentraleinheit und eine derartige Vorrichtung aufweisen.

Nachfolgend soll die Erfindung anhand der beiliegenden Zeichnungen näher erläutert werden.
- Figur 1: zeigt dabei schematisch ein Bussystem, wie es bei der vorliegenden Erfindung Anwendung finden kann,
- Figur 2: zeigt schematisch ein Flussdiagramm gemäß einem ersten Ausführungsbeispiel der vorliegenden Erfindung.

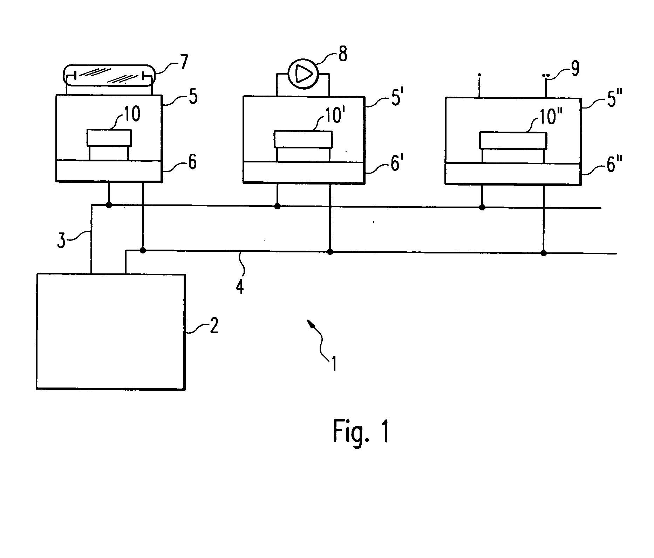

Wie in Figur 1 ersichtlich, weist ein Steuersystem 1 für Vorrichtungen, die hier als elektrische Betriebsgeräte 5, 5', 5" ausgebildet sind, einen Bus, bestehend aus zwei Busleitungen 3, 4 sowie eine Zentraleinheit 2 auf. Die Busleitungen 3, 4 sind wie ersichtlich mit den Betriebsgeräten 5, 5', 5" direkt verbunden. Bei den Vorrichtungen kann es sich um Befehlsempfänger wie hier die elektrischen Betriebsgeräte 5, 5', 5", aber auch um Befehls-/Informationssender wie beispielsweise Schalter, Dimmer oder auch Sensoren handeln. Die in Figur 1 dargestellten Betriebsgeräte 5, 5', 5" können zum Betrieb verschiedenster elektrischer Geräte, insbesondere in der Gebäudetechnik übliche Geräte wie Lampen 7, Klimatechnik/Lüftungsgeräte 8 oder sonstige Gebäudetechnikgeräte 9 verwendet werden können.

Jedes der elektrischen Betriebsgeräte 5, 5', 5" weist eine digitale Schnittstelle 6, 6', 6" auf, mittels der es bidirektional über ein Paar von Busleitungen 3, 4 Signale beispielsweise mit der Zentrale 2 austauschen kann. Weiterhin weist jedes Betriebsgerät 5, 5', 5" eine lokale Steuereinheit (Controller) 10, 10', 10" auf.

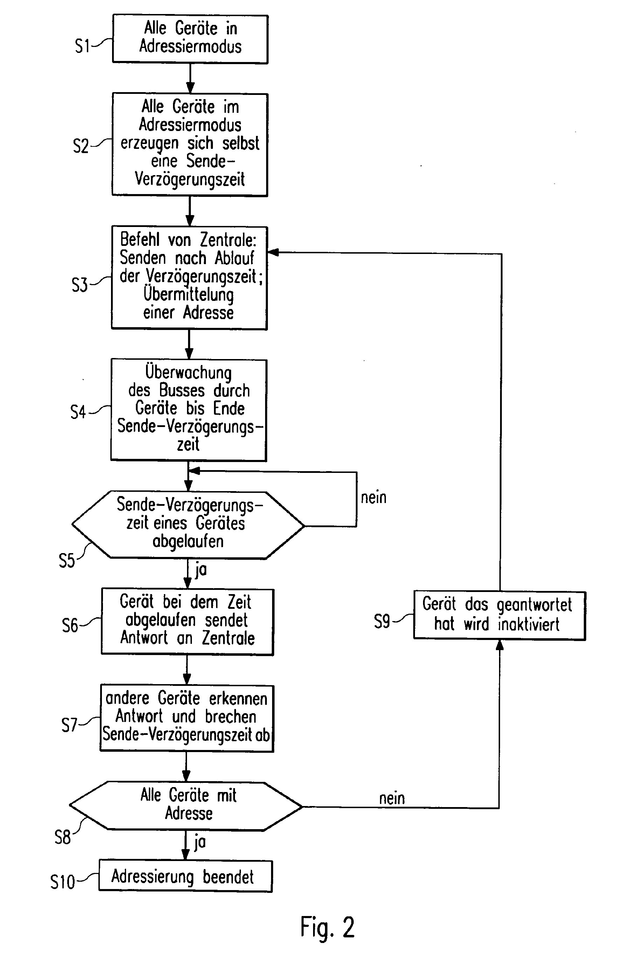

Ein erstes Ausführungsbeispiel soll nunmehr anhand des in Figur 2 dargestellten Ablaufs näher erläutert werden. Zuerst werden in einem Schritt S1 alle Vorrichtungen beispielsweise mittels eines entsprechenden Befehls von der Zentrale in einen Adressiermodus gesetzt. In einem folgenden Schritt S2 erzeugen die Vorrichtungen jeweils individuell und unabhängig voneinander einen zeitlichen Parameter für eine Sendeaktivität, wie beispielsweise im vorliegenden Ausführungsbeispiel eine Sende-Verzögerungszeit. Genauer gesagt genügt es, wenn sich zu diesem Zeitpunkt jede Vorrichtung eine Zahl wie beispielsweise eine Zufallszahl oder eine werkseitige Identifikationsnummer zuteilt, wobei diese Zahl dann später als Grundlage für den zeitlichen Parameter der Sendecharakteristik, wie beispielsweise die Sende-Verzögerungszeit im vorliegenden Ausführungsbeispiel gemäß Figur 2, Verwendung finden kann.

In einem folgenden Schritt S3 wird der Bus in den Ruhezustand versetzt, was beispielsweise gemäß dem DALI-Standard bedeutet, dass die Busspannung auf "high" gesetzt wird. Weiterhin werden die Vorrichtungen wiederum durch einen Befehl von der Zentrale oder aber selbsttätig in einen temporären Sendemodus gesetzt. Des Weiteren übermittelt die Zentrale an die Vorrichtungen auch noch eine für alle Vorrichtungen gleiche Adresse.

Dieser aktivierende Sendemodus bewirkt bei allen Vorrichtungen, dass sie während ihrer individuellen Sende-Verzögerungszeit den Bus 3, 4 fortlaufend auf eine Antwort der anderen Vorrichtungen überwachen (Schritt S4). Falls eine Vorrichtung vor dem Ende ihrer individuellen Sende-Verzögerungszeit auf dem Bus eine Antwort einer anderen Vorrichtung erkennt, bricht sie ihre Sende-Verzögerungszeit ab (Schritt S7) und wartet auf einen neuen Sendebefehl. Falls die Sende-Verzögerungszeit abgelaufen ist (Schritt S5) und noch keine Antwort einer anderen Vorrichtung erkannt wurde, antwortet die entsprechende Vorrichtung der Zentrale (Schritt S6), dass sie die übermittelte Adresse übernimmt.

Die Schritte S3 bis S7 werden solange wiederholt, bis jeder Vorrichtung eine Adresse zugeordnet ist (Schritt 8). Hierbei übermittelt die Zentrale 2 mit jedem Sendebefehl eine andere Adresse. Dabei kann die übermittelte andere bzw. neue Adresse gleichzeitig den Sendebefehl darstellen.

Zu beachten ist noch, dass bereits registrierte Vorrichtungen an den weiteren Sendezyklen nicht mehr teilnehmen (Schritt 9). Diese Deaktivierung von aktivierten Vorrichtungen kann wiederum selbsttätig durch eine Vorrichtung oder aber angewiesen durch die Zentrale erfolgen. Der Adressiervorgang ist schließlich abgeschlossen (Schritt 10), wenn alle Vorrichtungen eine Adresse aufweisen.

Auf die Ermittlung bzw. Berechnung der Sende-Verzögerungszeit soll hier nicht genauer eingegangen werden, da dies bereits aus dem Stand der Technik, insbesondere aus der deutschen Offenlegungsschrift DE 103 29 682 A1 bekannt ist.

Das Ausführungsbeispiel von Figur 2 ist im Übrigen nur eine Möglichkeit, wie eine sich von jeder Vorrichtung selbst zugeteilte Zahl als Zeitparameter für eine Sendeaktivität verwendet werden kann. Eine weitere Möglichkeit besteht darin, dass anstatt der Sende-Verzögerungszeit eine Sendezeit ermittelt wird. Die Vorrichtungen gehen nach dem Sendebefehl der Zentrale dann in einen Sendezustand über und senden bis zum Ablauf ihrer jeweiligen individuellen Sendezeit auf den Bus. Nach Ablauf einer Sendezeit beendet nun jede Vorrichtung seinen Sendezustand und überprüft dabei, ob sie den Bus wieder in den Ruhezustand versetzen kann. Bei der Verwendung des DALI-Standards beispielsweise prüft eine Vorrichtung also, ob sie durch Beenden ihrer eigenen Sendeaktivität den Bus wieder in den "high" Zustand versetzen kann. Dies gelingt indessen nur derjenigen Vorrichtung, die sich selbst die höchste Zahl und somit die höchste Sendedauer zugeteilt hat. Diejenige Vorrichtung, die den Buszustandswechsel erreichen konnte, betrachtet sich selbst als ausgewählt und antwortet der Zentrale, dass sie die übermittelte Adresse übernimmt. Auch hier wird das Verfahren solange wiederholt bis alle Vorrichtungen eine Adresse aufweisen.

Bei beiden Ausführungsbeispielen kann des Weiteren noch vorgesehen sein, dass die Belegung einer Adresse durch zwei verschiedene Vorrichtungen automatisch erkannt und beseitigt wird. So gibt beispielsweise eine neu hinzugefügte Vorrichtung eine Anfrage auf den Bus, ob die eigene Betriebsadresse bereits vorhanden ist. Für den Fall, dass sich eine Vorrichtung meldet, der die Adresse bereits zu einem frühren Zeitpunkt zugewiesen wurde, wird die Vorrichtung ihre eigene Adresse löschen und in einen neuen Adressierungsvorgang eine neue Adresse erhalten. Des Weiteren ist eine Kontrolle ob mehrere Vorrichtungen gleichzeitig eine Adresse nutzen auch nach Abschluss der Adressvergabe möglich, um zu überprüfen, ob jede Adresse tatsächlich nur einer Vorrichtung zugeordnet worden ist.

Außerdem kann die vorliegende Erfindung auch derart ausgestaltet sein, dass neu hinzugefügte Vorrichtungen sich selbstständig melden und eine Systemmodifikation auslösen. Bei einer derartigen Systemmodifikation wird zuerst geprüft, welche Vorrichtungen bereits eine Adresse aufweisen. Im Anschluss daran wird eine Adressvergabe durchgeführt, bei der nur diejenigen Vorrichtungen einbezogen werden, die noch keine Adresse aufweisen.

Des Weiteren kann nach einer Adressvergabe auch noch vorgesehen sein, dass eine automatische Erkennung des Teilnehmertyps und seiner entsprechenden Parametrisierung der jeweiligen Vorrichtung durchgeführt wird.

## Patentansprüche

1. Verfahren zur Adressvergabe an Vorrichtungen, die mit einer Busschnittstelle versehen sind, aufweisend die folgenden Schritte:
a.) jede Vorrichtung (5, 5', 5") erhält zeitgleich einen Sendebefehl und eine für alle Vorrichtungen (5, 5', 5") gleiche Adresse von einer Zentrale (2), mit der die Vorrichtungen (5, 5', 5") über einen Bus (3, 4) verbunden sind,
b.) die Vorrichtungen (5, 5', 5") legen unabhängig voneinander jeweils für sich selbst eine Sende-Verzögerungszeit fest,
c.) jede Vorrichtung (5, 5', 5") überwacht während ihrer Sende-Verzögerungszeit fortlaufend den Bus (3, 4) auf eine Antwort der anderen Vorrichtungen (5, 5', 5"),
d.) die Vorrichtung (5, 5', 5") bei der als erstes die Sende-Verzögerungszeit abgelaufen ist, antwortet der Zentrale (2), das sie die übermittelte Adresse übernimmt,
e.) alle nicht in Schritt d.) betroffenen Vorrichtungen (5, 5', 5") brechen die Sende-Verzögerungszeit ab und warten auf einen neuen Sendebefehl der Zentrale (2), wenn sie die Antwort der in Schritt d.) betroffenen Vorrichtung (5, 5', 5") auf dem Bus (3, 4) erkennen, und
f.) die Schritte a.) bis e.) werden ohne diejenigen Vorrichtungen (5, 5', 5") wiederholt, die bereits eine Adresse aufweisen.

2. Verfahren zur Adressvergabe an Vorrichtungen, die mit einer Busschnittstelle versehen sind, aufweisend die folgenden Schritte:
a.) jede Vorrichtung (5,5', 5") erhält zeitgleich einen Sendebefehl und eine für alle Vorrichtungen (5, 5', 5") gleiche Adresse von einer Zentrale (2), mit der die Vorrichtungen (5, 5', 5") über einen Bus (3, 4) verbunden sind und sendet, bis eine unabhängig voneinander individuell von jeder Vorrichtung (5, 5', 5") festgelegte Sendezeit abläuft,
b.) nach Ablauf der jeweiligen Sendezeit prüft jede Vorrichtung (5, 5', 5"), ob sie durch Beenden des Sendens den Buszustand geändert hat,
c.) die Vorrichtung (5, 5', 5"), die nach Ablauf der Sendezeit den Buszustand geändert hat, antwortet der Zentrale (2), das sie die übermittelte Adresse übernimmt, und
d.) die Schritte a.) bis c.) werden ohne diejenigen Vorrichtungen (5, 5', 5") wiederholt, die bereits eine Adresse aufweisen.

3. Verfahren nach einem der vorhergehenden Ansprüche,
**dadurch gekennzeichnet,**
**dass** ein Senden von Vorrichtungen (5, 5', 5"), denen bereits eine Adresse zugewiesen wurde, selbstständig durch die entsprechende Vorrichtung (5, 5', 5") oder durch einen Befehl von der Zentrale (2) verhindert wird.

4. Verfahren nach einem der vorhergehenden Ansprüche,
**dadurch gekennzeichnet,**
**dass** die Sende-Verzögerungszeit bzw. die Sendezeit als Zufallszahl oder ausgehend von einer in der Vorrichtung (5, 5', 5") vorhandenen Nummer bzw. einem Identifikationscode erzeugt werden.

5. Verfahren nach einem der vorhergehenden Ansprüche,
**dadurch gekennzeichnet,**
**dass** die Schritte wiederholt werden, bis jeder Vorrichtung (5, 5', 5") eine Adresse zugeordnet ist.

6. Verfahren nach einem der vorhergehenden Ansprüche,
**dadurch gekennzeichnet,**
**dass** der DALI-Standard verwendet wird.

7. Verfahren nach einem der vorhergehenden Ansprüche,
**dadurch gekennzeichnet,**
**dass** eine neu hinzugefügte Vorrichtung (5, 5', 5") sich selbstständig meldet und eine Systemmodifikation auslöst.

8. Verfahren nach einem der vorhergehenden Ansprüche,
**dadurch gekennzeichnet,**
**dass** die gleichzeitige Nutzung einer Adresse durch mehrere Vorrichtungen (5, 5', 5") ohne externen Eingriff erkannt und beseitigt wird.

9. Verfahren nach einem der vorhergehenden Ansprüche,
**dadurch gekennzeichnet,**
**dass** der Teilnehmertyp und die entsprechende Parametrierung der Vorrichtungen (5, 5', 5") automatisch erkannt wird.

10. Vorrichtung, aufweisend einen digitalen Signaleingang (6, 6', 6") und einen Controller, der zur Durchführung eines Verfahrens nach einem der vorhergehenden Ansprüche programmiert ist.

11. Steuersystem (1), aufweisend eine Zentraleinheit (2) und wenigstens eine Vorrichtung (5, 5', 5") nach Anspruch 10.

## Claims

1. Method for assigning addresses to devices that are provided with a bus interface, comprising the following steps:
a.) each device (5, 5', 5") simultaneously receives a transmission command and the same address for all devices (5, 5', 5") from a central unit (2), with which the devices (5, 5', 5") are connected via a bus (3, 4),
b.) the devices (5, 5', 5") each independently determine a transmission delay time,
c.) each device (5, 5', 5") continuously monitors the bus (3, 4) during their transmission delay time for a response from the other devices (5, 5', 5"),
d.) the device (5, 5', 5"), whose transmission delay time expires first, replies to the central unit (2) that it accepts the transmitted address,
e.) all the devices (5, 5', 5") not affected in step d.) interrupt their transmission delay time and wait for a new transmission command from the central unit (2), when it recognises on the bus (3, 4) the reply of the devices (5, 5', 5") affected in step d.), and
f.) the steps a.) to e.) are repeated except for those devices (5, 5', 5") which already have an address.

2. Method for assigning addresses to devices that are provided with a bus interface, comprising the following steps:
a.) each device (5, 5', 5") simultaneously receives a transmission command and the same address for all devices (5, 5', 5") from a central unit (2), with which the devices (5, 5', 5") are connected via a bus (3, 4), and transmits until an independently determined transmission time of the devices (5, 5', 5") expires,
b.) after the expiry of the respective transmission time, each device (5, 5', 5") checks whether it has changed after the ending of the transmission of the bus status,
c.) the device (5, 5', 5"), which has changed after the ending of the transmission time of the bus status, replies to the central unit (2) that it accepts the transferred address, and
d.) the steps a.) to c.) are repeated except for those devices (5, 5', 5") which already have an address.

3. Method according to any one of the preceding claims, **characterised in that**
transmission from the devices (5, 5', 5"), which have already been assigned an address, is automatically prevented by the corresponding device (5, 5', 5"), or by a command from the central unit (2).

4. Method according to any one of the preceding claims, **characterised in that**
the transmission delay time or the transmission time is generated as a random number or from a number in the device (5, 5', 5") or an identification code.

5. Method according to any one of the preceding claims, **characterised in that**
the steps are repeated until each device (5, 5', 5") is assigned an address.

6. Method according to any one of the preceding claims, **characterised in that**
the DALI standard is used.

7. Method according to any one of the preceding claims, **characterised in that**
a newly added device (5, 5', 5") reports itself and triggers a system modification.

8. Method according to any one of the preceding claims, **characterised in that**
the simultaneous use of an address by a plurality of devices (5, 5', 5") is detected and eliminated without external intervention.

9. Method according to any one of the preceding claims, **characterised in that**
the type and the appropriate parameterisation of the devices (5, 5', 5") is automatically detected.

10. Device comprising a digital signal input (6, 6', 6") and a controller that is programmed to implement a method according to one of the preceding claims.

11. Control system (1) comprising a central unit (2) and at least one device (5, 5', 5") according to claim 10.

## Revendications

1. Procédé d'attribution d'adresse à des dispositifs munis d'une interface bus, comprenant les étapes suivantes :
a) chaque dispositif (5, 5', 5") reçoit simultanément un ordre d'émission et une adresse identique pour tous les dispositifs (5, ,5', 5") d'une centrale (2) avec laquelle les dispositifs (5, 5', 5") sont reliés par l'intermédiaire d'un bus (3, 4),
b) les dispositifs (5, 5', 5") déterminent, indépendamment les uns des autres, pour eux-mêmes, une temporisation d'émission,
c) chaque dispositif (5, 5', 5") surveille en permanence, pendant sa temporisation d'émission, le bus (3, 4) afin de détecter une réponse des autres dispositifs (5, 5', 5"),
d) le dispositif (5, 5', 5") dans lequel la temporisation d'émission est écoulée en premier répond à la centrale (2) qu'il prend en compte l'adresse transmise,
e) tous les dispositifs (5, 5', 5") non concernés par l'étape d) interrompent la temporisation et attendent un nouvel ordre d'émission de la centrale (2) lorsqu'ils détectent la réponse du dispositif (5, 5', 5") concerné à l'étape d) sur le bus (3, 4) et
f) les étapes a) à e) sont répétées sans les dispositifs (5, 5', 5") qui possèdent déjà une adresse.

2. Procédé d'attribution d'adresse à des dispositifs munis d'une interface bus, comprenant les étapes suivantes :
a) chaque dispositif (5, 5', 5") reçoit simultanément un ordre d'émission et une adresse identique pour tous les dispositifs (5, ,5', 5") d'une centrale (2) avec laquelle les dispositifs (5, 5', 5") sont reliés par l'intermédiaire d'un bus (3, 4) et émet jusqu'à ce qu'un temps d'émission définie indépendamment individuellement par chaque dispositif (5, 5', 5") soit écoulé,
b) après l'écoulement du temps d'émission, chaque dispositif (5, 5', 5") vérifie si la fin de l'émission a modifié l'état du bus,
c) le dispositif (5, 5', 5"), qui a modifié l'état du bus après l'écoulement du temps d'émission, répond à la centrale (2) qu'il prend en compte l'adresse transmise et
d) les étapes a) à c) sont répétées sans les dispositifs (5, 5', 5") qui possèdent déjà une adresse.

3. Procédé selon l'une des revendications précédentes,
**caractérisé en ce que**
une émission des dispositifs (5, 5', 5") auxquels une adresse a déjà été attribuée est empêchée par le dispositif (5, 5', 5") correspondant ou par un ordre de la centrale (2).

4. Procédé selon l'une des revendications précédentes,
**caractérisé en ce que**
la temporisation d'émission ou le temps d'émission est généré sous la forme d'un nombre aléatoire ou à partir d'un numéro ou d'un code d'identification existant dans le dispositif (5, 5', 5").

5. Procédé selon l'une des revendications précédentes,
**caractérisé en ce que**
les étapes sont répétées jusqu'à ce qu'une adresse soit attribuée à chaque dispositif (5 , 5' , 5").

6. Procédé selon l'une des revendications précédentes,
**caractérisé en ce que**
le standard DALI est utilisé.

7. Procédé selon l'une des revendications précédentes,
**caractérisé en ce que**
un nouveau dispositif (5, 5', 5") ajouté se signale automatiquement et déclenche une modification du système.

8. Procédé selon l'une des revendications précédentes,
**caractérisé en ce que**
l'utilisation simultanée d'une adresse par plusieurs dispositifs (5, 5', 5") est détectée et éliminée sans intervention extérieure.

9. Procédé selon l'une des revendications précédentes,
**caractérisé en ce que**
le type de participant et le paramétrage correspondant des dispositifs (5, 5', 5") est détecté automatiquement.

10. Dispositif comprenant une entrée de signal numérique (6, 6', 6") et un contrôleur qui est programmé pour la réalisation d'un procédé selon l'une des revendications précédentes.

11. Système de commande (1), comprenant une unité centrale (2) et au moins un dispositif (5, 5', 5") selon la revendication 10.
